# EUROPÄISCHE PATENTSCHRIFT

(11) **EP 1 771 338 B1**
(45) Veröffentlichungstag und Bekanntmachung des Hinweises auf die Patenterteilung: **14.11.2007**
(21) Anmeldenummer: 05747106.2
(22) Anmeldetag: 30.06.2005
(51) Int. Cl.: B65B 35/58, B65G 47/248

(54) **VERFAHREN UND VORRICHTUNG ZUM HERSTELLEN VON PACKUNGSEINHEITEN AUS MINDESTENS ZWEI PACKUNGEN**
METHOD AND DEVICE FOR PRODUCING PACKING UNITS FROM AT LEAST TWO PACKS
PROCEDE ET DISPOSITIF POUR REALISER DES UNITES D'EMBALLAGE A PARTIR D'AU MOINS DEUX EMBALLAGES

(30) Priorität: 26.07.2004 DE 102004036162
(43) Veröffentlichungstag der Anmeldung: 11.04.2007
(73) Patentinhaber: Focke & Co. (GmbH & Co. KG), 27283 Verden (DE)
(72) Erfinder: SCHULTE, Josef, 26871 Aschendorf (DE); KERN, Wolfgang, 26160 Bad Zwischenahn (DE)
(74) Vertreter: Bolte, Erich
(86) Internationale Anmeldenummer: PCT/EP2005/007027
(87) Internationale Veröffentlichungsnummer: WO 2006/010427

(56) Entgegenhaltungen:
- FR-A- 2 171 992
- US-A- 3 252 384
- US-A- 4 672 795
- US-B1- 6 186 312

## Beschreibung

Die Erfindung betrifft ein Verfahren zum Herstellen von Packungseinheiten aus mindestens zwei hinsichtlich ihrer Gestaltung, insbesondere hinsichtlich der geometrischen Form unter Bildung der Packungseinheit zusammenfügbaren Packungen, vorzugsweise in der Ausführung mit trapezförmigem Packungsteil und anschließender einseitiger Lasche, wobei die ausgerichteten Packungen in Dichtfolge durch einen Zuführförderer angeliefert werden. Weiterhin betrifft die Erfindung eine Vorrichtung zur Durchführung des Verfahrens. Eine solche Vorrichtung und Verfahren sind z.B. aus Dokument US 4 672 795 bekannt.

Für Gegenstände, insbesondere Packungen, mit aufeinander abgestimmten Formen besteht die Aufgabe, nach Fertigstellung der Gegenstände bzw. Packungen zwei oder mehr Gegenstände bzw. Packungen unter Berücksichtigung der besonderen Gestaltung zu einer (Packungs-)Einheit zusammenzufügen. Als Beispiel sind Packungen für moderne Rasierklingen (3fach-Klingen) zu nennen, die aus einem im Querschnitt trapezförmigen Packungsteil und einer seitlich angebrachten Lasche bestehen. Zwei Packungen sind mit formschlüssiger Relativstellung zusammengefügt und bilden so eine Packungseinheit.

Der Erfindung liegt die Aufgabe zugrunde, die bei übereinstimmender Relativstellung ankommenden Gegenstände bzw. Packungen so hinsichtlich der Relativstellung zu verändern, dass mindestens zwei einander zugeordnete Packungen in formschlüssiger Formation zu der Packungseinheit zusammengefügt werden können.

Zur Lösung dieser Aufgabe besteht das erfindungsgemäße Verfahren aus folgenden Merkmalen:
a) die Packungen werden während fortgesetzten Transports gewendet, derart, dass jeweils (zwei) benachbarte Packungen eine der Packungseinheit entsprechende Relativstellung aufweisen,
b) jede zweite Packung wird hinsichtlich der Transportgeschwindigkeit verzögert oder beschleunigt, derart, dass einer Packungseinheit zugeordnete Packungen zueinander ausgerichtet werden,
c) die einander zugeordneten (zwei) Packungen einer Packungseinheit werden durch (Quer-)Verschieben unter Bildung einer Packungseinheit zusammengeführt,
d) die so fortlaufend gebildeten Packungseinheiten werden mit Abstand voneinander abtransportiert.

Bei dem erfindungsgemäßen Verfahren werden die vorzugsweise aufrechten Packungen in Dichtlage zugeführt. Alle Packungen werden während des kontinuierlichen Transports gewendet und durch Verzögern oder Beschleunigen auf eine hinsichtlich der Packungseinheit erforderliche Relativstellung ausgerichtet. Durch Querbewegung werden die beiden Packungen zu der Packungseinheit zusammengefügt.

Eine Besonderheit der Erfindung besteht darin, dass jede zweite Packung aus der Ebene bzw. Bewegungsbahn der ankommenden Packungen seitlich ausgeschleust und entlang einer zweiten Transportbahn gefördert wird. Im Bereich dieser zweiten Transportbahn werden die Packungen gewendet. Vorzugsweise wird so vorgegangen, dass die in Fortsetzung des Zuführförderers weitertransportierten Packungen und die Packungen der parallelen Transportbahn jeweils um 90° in entgegengesetzten Richtungen gewendet werden unter Bildung der der Packungseinheit entsprechenden Relativstellung.

Die erfindungsgemäße Vorrichtung weist neben dem fortgesetzten Zuführförderer einen zweiten, versetzten Förderer, nämlich Wendeförderer, für jede zweite Packung auf. Die Packungen werden dabei durch ortsfeste, entsprechend geformte Führungsorgane gewendet, insbesondere durch kurvenartig gestaltete Führungsschienen.

Weitere Besonderheiten der Erfindung werden nachfolgend anhand der Zeichnungen näher erläutert. Es zeigt:
- Fig. 1: ein Beispiel einer (einzelnen) Packung in perspektivischer Darstellung,
- Fig. 2: eine Gebindepackung aus mehreren Packungseinheiten, ebenfalls in perspektivischer Darstellung,

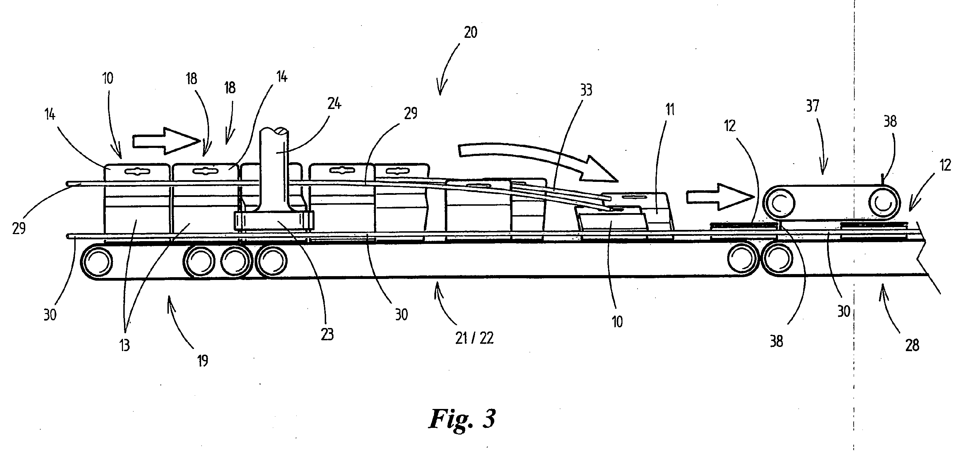

- Fig. 3: eine Vorrichtung zur Bildung von Packungseinheiten in schematischer Seitenansicht,
- Fig. 4: die Vorrichtung gemäß Fig. 3 in schematischem Grundriss,
- Fig. 5: eine Phase der Wendebewegung von Packungen entsprechend Querschnitt V-V in Fig. 4,
- Fig. 6: eine Situationsdarstellung in der Schnittebene VI-VI der Fig. 4,
- Fig. 7: einen Querschnitt in der Ebene VII-VII in Fig. 4.

In den Zeichnungen ist als Ausführungsbeispiel eine Packung 10, 11 gezeigt, die aufgrund der geometrischen Gestaltung geeignet ist, durch formschlüssige Relativstellung von zwei Packungen 10, 11 eine kompakte Packungseinheit 12 zu bilden. Die Packungen 10, 11 dienen hier beispielsweise zur Aufnahme von 3fach-Rasierklingen. Der konstruktive Aufbau ist durch ein Packungsteil 13 und eine von diesem abstehende Lasche 14 bestimmt. Das Packungsteil 13 ist im Querschnitt trapezförmig ausgebildet mit Vorderwand 15, Rückwand 16, einer schräggerichteten Seitenwand 17 und einer schmalen Bodenwand 39. Die verhältnismäßig steife, abstehende Lasche 14 erstreckt sich in Verlängerung der Rückwand 16. Die Abmessung der Lasche 14 in dieser Richtung ist etwas geringer als die Breite bzw. Höhe der Vorderwand 15.

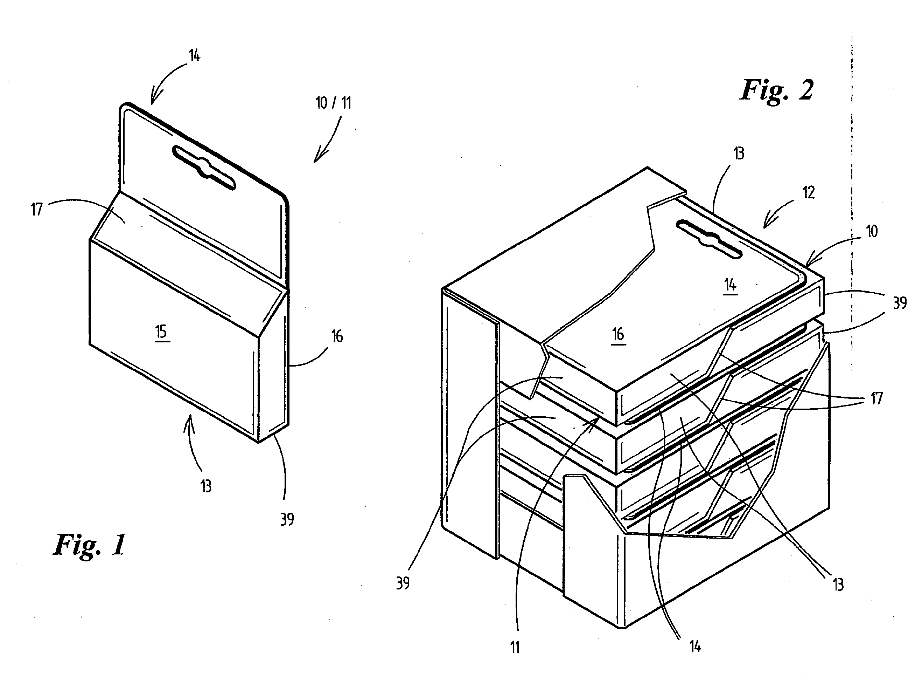

Die Packungseinheit 12 besteht aus zwei formschlüssig aneinander liegenden Packungen 10, 11. Die schräggerichteten Seitenwände 17 der Packungen 10, 11 liegen aneinander. Die Lasche 14 der einen Packung 10, 11 liegt an der Vorderwand 15 der anderen Packung 11, 10 an (Fig. 2).

Die Packungseinheit 12 bildet einen exakten quaderförmigen Block, der die Bildung eines Stapels ermöglicht. Eine Gebindepackung (Fig. 2) aus mehreren übereinander liegenden Packungseinheiten 12 ist für Versand bzw. Präsentation geeignet.

Die Packungen 10, 11 werden von einer Verpackungsmaschine bzw. einem Packungsvorrat in gleichgerichteter Relativstellung angeliefert. Zur Bildung der Packungseinheiten 12 muss die Relativstellung der einander zugeordneten Packungen 10, 11 verändert werden. Dies erfolgt während des vorzugsweise kontinuierlichen Transports der Packungen 10, 11.

Bei der dargestellten Vorrichtung werden die Packungen 10, 11 unter Bildung einer Dichtreihe 18 durch einen Zuführförderer 19 angeliefert. Dieser ist als Endlosgurt ausgebildet. Die Packungen 10, 11 stehen in aufrechter Ebene mit nach oben weisender Lasche 14, mit der Bodenwand 39 auf dem Zuführförderer 19 ruhend.

Im Anschluss an den Zuführförderer 19 werden die Packungen 10, 11 einer Wendestrecke 20 übergeben. In deren Bereich wird die Relativstellung von je zwei einander zugeordneten Packungen 10, 11 so verändert, dass diese schließlich in horizontaler Ebene ausgerichtet sind, und zwar entsprechend der Formation innerhalb der Packungseinheit 12. Dies bedeutet, dass jeweils eine Packung 10 mit nach unten gerichteter Rückwand 16 und Lasche 14 und die andere Packung 11 mit oben liegender Rückwand 16 und Lasche 14 ausgerichtet sind. Die schräggerichteten Seitenwände 17 sind einander zugekehrt.

Zur Durchführung der erforderlichen Wendebewegungen der Packungen 10, 11 werden diese zeitweilig auf verschiedenen, nebeneinander liegenden Transportbahnen gefördert. Die Vorrichtung ist zu diesem Zweck so ausgebildet, dass sie aus zwei Wendeförderern 21 und, 22 besteht. Beides sind Endlosförderer, nämlich Gurte. Die beiden Wendeförderer 21, 22 liegen unmittelbar nebeneinander in paralleler Ausrichtung und sind eigenständig antreibbar.

Der erste Wendeförderer 21 erstreckt sich in Fortsetzung des Zuführförderers 19, kann ggf. durch diesen bei entsprechender Verlängerung gebildet sein. Die Packungen 10 werden demnach in Fortsetzung der Bewegungsrichtung des Zuführförderers 19 auf dem Wendeförderer 21 weitertransportiert.

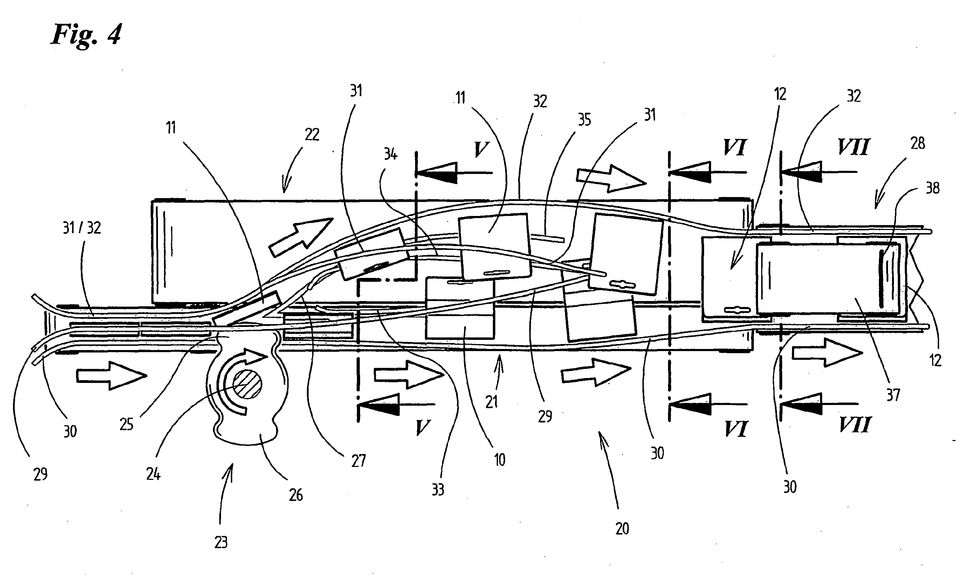

Jede zweite Packung 11 wird aus der Dichtreihe 18 in Querrichtung ausgesondert bzw. ausgeschleust und in die Transportbahn des zweiten Wendeförderers 22 eingeführt. Zu diesem Zweck ist im Eintrittsbereich der Wendestrecke 20 ein Ausschleuseorgan angeordnet, nämlich ein in horizontaler Ebene drehend umlaufendes Segmentrad 23 mit einer aufrechten Welle 24. Das scheibenförmige Segmentrad 23 weist mehrere, im vorliegenden Falle zwei Vorsprünge bzw. Segmente 25, 26 auf. Diese kommen jeweils an einer Seitenfläche der auszuschleusenden Packungen 11 zur Anlage, nämlich hier an der Vorderwand 15. Die Segmente 25, 26 treten zu diesem Zweck in die Bewegungsbahn des Zuführförderers 19 ein. Die Drehbewegung des Segmentrades 23 ist so auf die Fördergeschwindigkeit des Zuführförderers 19 abgestimmt, dass jeweils ein Segment 25, 26 auf eine auszuschleusende Packung 11 auftritt. Wie in Fig. 4 gezeigt, wird die betreffende Packung 11 durch das Segment 25, 26 in eine Schrägstellung bewegt und gelangt dadurch in den Bereich eines ortsfesten Abweisers 27, der bei fortgesetztem Transport durch den Zuführförderer 19 und anschließend durch den Wendeförderer 22 die Packung 11 in den Bereich dieses Wendeförderers 22 lenkt.

Die Packungen 10, 11 werden im Bereich des Zuführförderers 19 und vor allem im Bereich der Wendestrecke 20 durch besondere ortsfeste Führungsorgane geführt, die so ausgebildet sind, dass bei der fortgesetzten Förderbewegung ein Kippen bzw. Wenden der Packungen 10, 11 stattfindet. Bei dem vorliegenden Ausführungsbeispiel wird so vorgegangen, dass beide Packungen 10, 11 während des Transports gekippt bzw. gewendet werden zur Bildung der Packungseinheit 12. Darüber hinaus werden die Packungen 10, 11 mit unterschiedlicher Geschwindigkeit im Bereich der Wendestrecke 20 gefördert, nämlich im vorliegenden Falle die Packungen 11 des Wendeförderers 22 mit verminderter Geschwindigkeit, derart, dass die einander zugeordneten benachbarten Packungen 10, 11 am Ende der Wendestrecke 20, nämlich bei Übergabe an einen Abförderer 28, zueinander ausgerichtet sind.

Die Führungsorgane für die Packungen 10, 11 sind hier als Führungsstangen bzw. Führungsschienen ausgebildet. Im Bereich des Zuführförderers 19 befinden sich zwei Führungsschienen, nämlich Oberschiene 29 und Unterschiene 30 bzw. 31, 32 zu beiden Seiten der Packungen 10, 11. Die der Rückseite zugekehrten Schienen 31, 32 liegen in einer gemeinsamen Vertikalebene, während frontseitig die Oberschiene 29 wegen der Anlage an der Lasche 14 gegenüber der Unterschiene 30 versetzt ist. Die frontseitigen Führungsschienen, nämlich Oberschiene 29 und Unterschiene 30, sind im weiteren Verlauf dem Wendeförderer 21 in Fortsetzung bzw. Verlängerung des Zuführförderers 19 zugeordnet. Die Unterschiene 30 bleibt im Bereich des Wendeförderers 21 eine untere, seitliche Begrenzung für die Packungen 10, und zwar in einer Höhe oberhalb des Wendeförderers 21, die der Bodenwand 39 der Packung 10 entspricht, so dass die Packungen 10 in liegender Position durch die Unterschiene 30 geführt sind. Die Unterschiene 30 erstreckt sich auch im Bereich des anschließenden Abförderers 28.

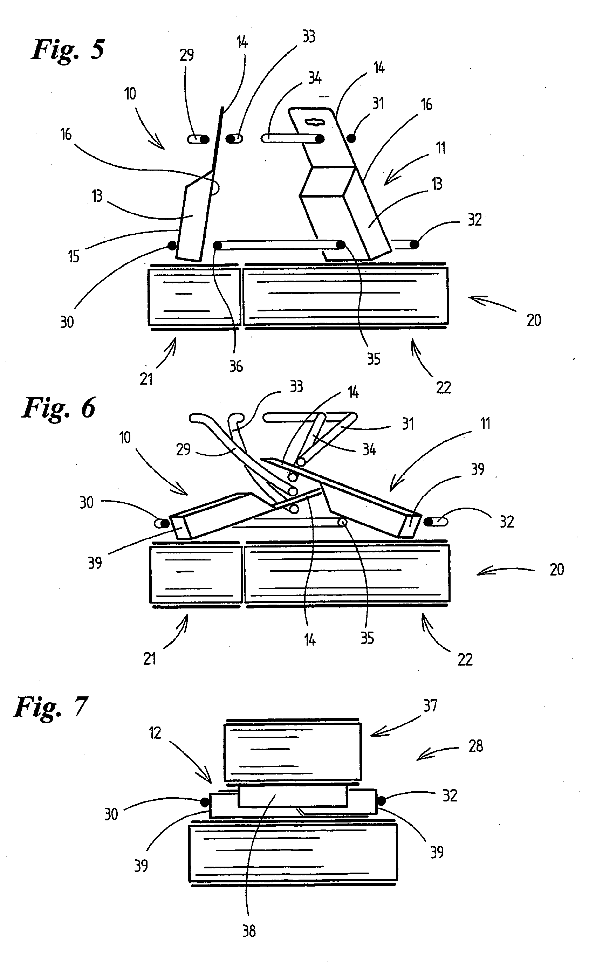

Die frontseitige Oberschiene 29 ist im Bereich des Wendeförderers 21 bogenförmig verlaufend (Fig. 4), derart, dass auf die Packungen 10 während des Transports eine Kippbewegung ausgeübt wird. In Seitenansicht ist zu diesem Zweck die Oberschiene 29 leicht abwärts geneigt, so dass während der gesamten Kippbewegung der Packungen 10 aus der aufrechten Stellung in eine horizontale die Führung gewährleistet ist. Im Bereich des Wendeförderers 21 ist eine weitere Führung auf der dem Wendeförderer 22 zugekehrten Seite angeordnet, nämlich eine Ergänzungsschiene 33. Diese erstreckt sich im Wesentlichen in Förderrichtung der Packungen 10 und dient als untere Auflage während der Kippbewegung (Fig. 5, Fig. 6). Die Ergänzungsschiene 33 hat demnach einen im Wesentlichen von oben nach unten gerichteten Verlauf. Die Packungen 10 bzw. deren Laschen 14 sind demnach während der Kippbewegung zwischen zwei Führungsorganen gesichert.

In besonderer Weise sind Führungsorgane des Wendeförderers 22 gestaltet. Oberschiene 31 und Unterschiene 32 aus dem Bereich des Zuführförderers 19 werden am Beginn der Wendestrecke 20 seitwärts ausgelenkt in den Bereich des Wendeförderers 22. Sie dienen zunächst noch als seitliche Führung für die ausgeschleusten Packungen 11. Die untere Führung, nämlich Unterschiene 32, erstreckt sich mit geringem Abstand oberhalb des Wendeförderers 22 und dient als Außenführung für die Packungen 11 im gesamten Wendebereich, und zwar in Höhe der Bodenwand 39. Die Oberschiene 31 liegt an der Rückseite der Lasche 14 an und bewirkt die Kippbewegung der Packungen 11 durch entsprechend bogenförmigen Verlauf (Fig. 4), zusätzlich von oben nach unten gerichtet. Auch für die Packungen 11 bzw. deren Laschen 14 ist eine Gegenführung während der Wendebewegung vorgesehen, nämlich eine Zusatzschiene 34. Diese liegt an der Frontseite der Lasche 14 an. Auch die Zusatzschiene 34 weist einen abwärtsgerichteten Verlauf entsprechend der Kippbewegung auf. Die Führungsorgane für die Packungen 10, 11 sind insoweit übereinstimmend, als die nach oben gerichteten, dünnwandigen Laschen 14 während des gesamten Kipp- bzw. Wendevorgangs beidseitig geführt sind.

Auch die Packungsteile 13 der Packungen 10, 11 sind innenseitig abgestützt, und zwar durch Stützschienen 35, 36. Diese erstrecken sich durchgängig im unteren Bereich der Packungen 10, 11, nämlich in Höhe der Unterschienen 30, 32. Die Stützschienen 35, 36 sind als Fortsetzung des gabel- bzw. keilförmigen Abweisers 27 angeordnet. Auch diese Stützschienen 35, 36 folgen dem Verlauf der Kippbewegungen.

Die innen liegenden Stütz- und Führungsorgane für die Packungen 10, 11 enden im Bereich der Wendestrecke 20 nach Vollendung der Kippbewegungen, so dass in der Endphase die Packungen 10, 11 mit Teilüberlappung der Laschen 14 nebeneinander liegen. Durch die Form der Unterschienen 30, 32 werden die zugeordneten Packungen 10, 11 durch Querverschiebung vereinigt, wobei die Unterschienen 30, 32 an den Bodenwänden 39 anliegen. Aufgrund trichterförmigen Verlaufs dieser Führungsorgane gelangen so Packungseinheiten 12 mit exakt ausgerichteten Packungen 10, 11 in den Bereich des Abförderers 28. Dieser erstreckt sich etwa mittig zu den beiden hier mit unterschiedlicher Breite ausgebildeten Wendeförderern 21, 22.

Der Abförderer 28 gewährleistet eine exakte Förderung der Packungseinheiten 12. Zu diesem Zweck ist mindestens im Anfangsbereich ein Obergurt 37 vorgesehen. Dieser weist (zwei) Anschläge 38 auf. Die Geschwindigkeiten sind so aufeinander abgestimmt, dass die zugeführten Packungseinheiten 12 gegen einen der Anschläge 38 laufen und so an der Frontseite ausgerichtet werden. Der Obergurt 37 mit Anschlag 38 läuft ein Stück des Förderweges mit der Packungseinheit 12 unter Stabilisierung der Stellung der Packungen 10, 11. Danach werden die Packungseinheiten 12 einem Packer zur Bildung eines Gebindepackers beispielsweise gemäß Fig. 2 zugeführt.

Die Fördergeschwindigkeiten sind in besonderer Weise aufeinander abgestimmt. Der Zuführförderer 19 läuft vorzugsweise mit derselben Fördergeschwindigkeit wie der anschließende Wendeförderer 21. Der Wendeförderer 22 wird mit geringerer Geschwindigkeit angetrieben. Der Abförderer 28 weist eine gegenüber dem Wendeförderer 22 nochmals reduzierte Fördergeschwindigkeit auf. Der Obergurt 37 ist mit derselben Geschwindigkeit angetrieben wie der Abförderer 28. Durch die geringere Fördergeschwindigkeit des Abförderers 28 ist gewährleistet, dass die beiden übereinanderliegenden Packungen 10, 11 gegen den Anschlag 38 des Abförderers 28 laufen und durch diesen so ausgerichtet werden.

Die Vorrichtung ist analog auch einsetzbar, wenn die Packungen 10, 11 in horizontaler Ebene liegend zugefördert werden. In diesem Falle ist lediglich jede zweite Packung zu wenden.

### Bezugszeichenliste

- 10: Packung
- 11: Packung
- 12: Packungseinheit
- 13: Packungsteil
- 14: Lasche
- 15: Vorderwand
- 16: Rückwand
- 17: Seitenwand
- 18: Dichtreihe
- 19: Zuführförderer
- 20: Wendestrecke
- 21: Wendeförderer
- 22: Wendeförderer
- 23: Segmentrad
- 24: Welle
- 25: Segment
- 26: Segment
- 27: Abweiser
- 28: Abförderer
- 29: Oberschiene
- 30: Unterschiene
- 31: Oberschiene
- 32: Unterschiene
- 33: Ergänzungsschiene
- 34: Zusatzschiene
- 35: Stützschiene
- 36: Stützschiene
- 37: Obergurt
- 38: Anschlag
- 39: Bodenwand

## Patentansprüche

1. Verfahren zum Herstellen von Packungseinheiten (12) aus mindestens zwei hinsichtlich ihrer Gestaltung, insbesondere hinsichtlich der geometrischen Form unter Bildung der Packungseinheit (12) zusammenfügbaren Packungen (10, 11), vorzugsweise in der Ausführung mit trapezförmigem Packungsteil (13) und anschließender einseitiger Lasche (14), wobei die ausgerichteten Packungen (10, 11) in Dichtfolge durch einen Zuführförderer (19) angeliefert werden, **gekennzeichnet durch** folgende Merkmale:
a) mindestens jede zweite Packung (10, 11) wird während fortgesetzten Transports gewendet, derart, dass jeweils (zwei) benachbarte Packungen (10, 11) eine der Packungseinheit (12) entsprechende Relativstellung aufweisen,
b) jede zweite Packung (10, 11) wird hinsichtlich der Transportgeschwindigkeit verzögert oder beschleunigt, derart, dass einer Packungseinheit (12) zugeordnete Packungen (10, 11) zueinander ausgerichtet werden,
c) die einander zugeordneten (zwei) Packungen (10, 11) einer Packungseinheit (12) werden **durch** (Quer-)Verschieben unter Bildung einer Packungseinheit (12) zusammengeführt,
d) die so fortlaufend gebildeten Packungseinheiten (12) werden abtransportiert.

2. Verfahren nach Anspruch 1, **dadurch gekennzeichnet, dass** die (flachen) Packungen (10, 11) in aufrechter Stellung durch den Zuführförderer (19) gefördert und dass beide Packungen (10, 11) im Bereich einer anschließenden Wendestrecke (20) je um 90° in entgegengesetzten Richtungen gewendet werden.

3. Verfahren nach Anspruch 1 oder 2, **dadurch gekennzeichnet, dass** jede zweite Packung (11) einer ankommenden fortlaufenden Packungsreihe seitwärts ausgeschleust, im Bereich der Wendestrecke (20) entlang einer separaten Förderbahn transportiert und währenddessen gewendet werden, wobei vorzugsweise die ausgeschleusten, entlang der separaten Förderbahn bewegten Packungen (11) hinsichtlich der Transportgeschwindigkeit verzögert werden, derart, dass einer Packungseinheit (12) zugeordnete Packungen (10, 11) aufeinander ausgerichtet sind.

4. Verfahren nach Anspruch 1 oder einem der weiteren Ansprüche, **dadurch gekennzeichnet, dass** die aus Packungsteil (13) und Lasche (14) bestehenden Packungen (10, 11) im Bereich der Wendestrecke (20) derart gewendet werden, dass die Laschen (14) von derselben Packungseinheit (12) zugeordneten Packungen (10, 11) einander zugekehrt sind.

5. Vorrichtung zum Herstellen von Packungseinheiten (12) aus mindestens zwei hinsichtlich ihrer Gestaltung, insbesondere hinsichtlich der geometrischen Form unter Bildung der Packungseinheiten (12) zusammenfügbaren Packungen (10, 11), vorzugsweise in der Ausführung mit trapezförmigem Packungsteil (13) und anschließender einseitiger Lasche (14), wobei die Packungen (10, 11) in ausgerichteter Stellung aufeinanderfolgend durch einen Zuführförderer (19) transportierbar sind, **gekennzeichnet durch** folgende Merkmale:
a) im Bereich einer Wendestrecke (20) sind mindestens zwei Förderer, nämlich Wendeförderer (21, 22), nebeneinander angeordnet,
b) die ankommenden Packungen (10, 11) sind abwechselnd dem einen und anderen Wendeförderer (21, 22) zuführbar,
c) im Bereich der Wendestrecke (20) sind mindestens die einen Packungen (10, 11) im Bereich des einen Wendeförderers (21, 22) **durch** auf die Packungen (10, 11) wirkende Wendeorgane während des Transports drehbar, derart, dass jeweils zwei einer Packungseinheit (12) zugeordnete Packungen (10, 11) die der Packungseinheit (12) entsprechende RelativStellung aufweisen,
d) die einander zur Bildung einer Packungseinheit (12) zugeordneten Packungen (10, 11) sind während des Transports **durch** Querbewegung zusammenfügbar.

6. Vorrichtung nach Anspruch 5, **dadurch gekennzeichnet, dass** ein erster Wendeförderer (21) in Fortsetzung des Zuführförderers (19) verläuft und dass der zweite Wendeförderer (22) versetzt und insbesondere parallel zum ersten Wendeförderer (21) angeordnet ist, wobei jede zweite ankommende Packung (11) durch ein Ausschleuseorgan querverschiebbar ist in den Bereich des zweiten, versetzten Wendeförderers (22).

7. Vorrichtung nach Anspruch 6 oder einem der weiteren Ansprüche, **dadurch gekennzeichnet, dass** das Ausschleuseorgan ein insbesondere, in horizontaler Ebene umlaufendes Segmentrad (23) mit Vorsprüngen bzw. Segmenten (25, 26) ist, wobei während der Drehbewegung des Segmentrades (23) die Segmente (25, 26) jeweils die auszuschleusende, zweite Packung (11) seitlich erfassen und in den Bereich des zweiten Wendeförderers (22) bewegen.

8. Vorrichtung nach Anspruch 5 oder einem der weiteren Ansprüche, **dadurch gekennzeichnet, dass** der zweite Wendeförderer (22) für die ausgeschleusten Packungen (11) mit geringerer Fördergeschwindigkeit angetrieben ist als der erste Wendeförderer (21), derart, dass die durch den zweiten Wendeförderer (22) transportierten Packungen (11) während der Wendebewegung auf die Packungen (10) des ersten Wendeförderers (21) ausrichtbar sind unter Bildung von nebeneinander liegenden Paaren von Packungen (10, 11).

9. Vorrichtung nach Anspruch 5 oder einem der weiteren Ansprüche, **dadurch gekennzeichnet, dass** beiden Wendeförderern (21, 22) vorzugsweise ortsfeste Führungsorgane zugeordnet sind, nämlich insbesondere Führungsstangen, Führungsschienen oder Rundriemen, durch die die Packungen (10, 11) beider Wendeförderer (21, 22) während des Transports um (etwa) 90° kippbar sind, insbesondere in entgegengesetzter-Kipprichtung.

10. Vorrichtung nach Anspruch 9, **dadurch gekennzeichnet, dass** die Packungen (10, 11) im Bereich des Zuführförderers (19) durch beidseitig wirksame Führungsorgane gestützt sind, insbesondere durch Oberschiene (29, 31) sowie Unterschiene (30, 32), wobei die Führungsschienen (29..32) in den Bereich der Wendestrecke (20) übergehen zur Führung und Umsetzung der Kippbewegung der Packungen (10, 11) im Bereich der Wendestrecke (20).

11. Vorrichtung nach Anspruch 10 oder einem der weiteren Ansprüche, **dadurch gekennzeichnet, dass** die Unterschienen (30, 32) als äußere Führungsorgane im Bereich beider Wendeförderer (21, 22) angeordnet sind entsprechend der Bewegungsbahn der Packungen (10, 11) und vorzugsweise in einem unteren Bereich entsprechend der Breite bzw. Höhe einer Bodenwand (39) der Packungen (10, 11), wobei die Unterschienen (30, 32) im Endbereich der Wendestrecke (20) ein quergerichtetes Zusammenschieben der Packungen (10, 11) zur Bildung der Packungseinheit (12) und zur Ausrichtung auf einen Abförderer (28) bewirken.

12. Vorrichtung nach Anspruch 10 oder einem der weiteren Ansprüche, **dadurch gekennzeichnet, dass** die Oberschienen (29, 31) in einem oberen Bereich an den Packungen (10, 11) im Bereich der Wendestrecke (20) anliegen, insbesondere an den Laschen (14), wobei durch bogenförmigen und abwärts gerichteten Verlauf der Oberschienen (29, 31) die Kippbewegung der Packungen (10, 11) bewirkt ist.

13. Vorrichtung nach Anspruch 9 oder einem der weiteren Ansprüche, **dadurch gekennzeichnet, dass** die Packungen (10, 11) in einem oberen Bereich, insbesondere im Bereich der Lasche (14), während der Kippbewegung durch beidseitig anliegende Führungsorgane gestützt sind, insbesondere durch die außen anliegenden Oberschienen (29, 31) einerseits und durch innenseitig anliegende Führungsschienen, nämlich Ergänzungsschiene (33) und Zusatzschiene (34).

14. Vorrichtung nach Anspruch 9 oder einem der weiteren Ansprüche, **dadurch gekennzeichnet, dass** die Packungen (10, 11) (auch) im unteren Bereich während der Kippbewegung beidseitig geführt sind, nämlich außen durch die Unterschienen (30, 32) und an der Innenseite durch Stützschienen (35, 36).

15. Vorrichtung nach Anspruch 5 oder einem der weiteren Ansprüche, **dadurch gekennzeichnet, dass** die Packungseinheiten (12) durch den an die Wendeförderer (21, 22) anschließenden Abförderer (28) ausrichtbar sind, vorzugsweise durch einen an der Oberseite der Packungseinheiten (12) anliegenden Obergurt (37) mit Anschlägen (38) für eine in Transportrichtung vorn liegende Seite der Packungseinheiten (12).

16. Vorrichtung nach Anspruch 15 oder einem der weiteren Ansprüche, **dadurch gekennzeichnet, dass** der Abförderer (28) mit einer gegenüber den Wendeförderern (21, 22) verminderten Fördergeschwindigkeit läuft.

## Claims

1. A method for producing packing units (12) from at least two packs (10, 11) whose design, in particular their geometric form, allows them to be fitted together to form the packing unit (12), preferably in the form of a trapezoidal pack element (13) and subsequent single-sided tab (14), with the oriented packs (10, 11) being delivered in close sequence by a feed conveyor (19), **characterized by** the following features:
a) at least every second pack (10, 11) is turned during the continued transport in such a way that (two) adjacent packs (10, 11) in each case have a relative position corresponding to the packing unit (12),
b) every second pack (10, 11) is decelerated or accelerated in its transport speed in such a way that packs (10, 11) assigned to a packing unit (12) are oriented to one another,
c) the associated (two) packs (10, 11) of a packing unit (12) are pushed (laterally) and assembled to form a packing unit (12),
d) the packing units (12) formed continuously in this way are transported away.

2. The method as claimed in claim 1, **characterized in that** the (flat) packs (10, 11) are transported in an upright position through the feed conveyor (19) and that both packs (10, 11) are each turned by 90° in opposite directions in the area of a subsequent turning line (20).

3. The method as claimed in claim 1 or 2, **characterized in that** every second pack (11) of an incoming continuous series of packs is diverted laterally, transported in the area of the turning line (20) along a separate conveying route and thereby turned, with the diverted packs (11) travelling along the separate conveying route preferably being decelerated in their transport speed in such a way that packs (10, 11) assigned to a packing unit (12) are oriented to one another.

4. The method as claimed in claim 1 or one of the further claims, **characterized in that** the packs (10, 11) consisting of pack element (13) and tab (14) are turned in the area of the turning line (20) in such a way that the tabs (14) of the packs (10, 11) assigned to the same packing unit (12) are facing one another.

5. A device for producing packing units (12) from at least two packs (10, 11) whose design, in particular their geometric form, allows them to be fitted together to form the packing unit (12), preferably in the form of a trapezoidal pack element (13) and subsequent single-sided tab (14), it being possible to transport the packs (10, 11) consecutively in oriented position by means of a feed conveyor (19), **characterized by** the following features:
a) in the area of a turning line (20) there are at least two conveyors, namely turning conveyors (21, 22), arranged alongside one another,
b) the arriving packs (10, 11) can be fed alternately onto the one and the other turning conveyor (21, 22),
c) in the area of the turning line (20) at least the one lot of packs (10, 11) can be turned in the area of the one turning conveyor (21, 22) by turning elements acting on the packs (10, 11) during transport in such a way that pairs of packs (10, 11) assigned to a packing unit (12) exhibit a relative position corresponding to the packing unit (12),
d) the associated packs (10, 11) for forming a packing unit (12) can be assembled during transport by a transverse movement.

6. The device as claimed in claim 5, **characterized in that** a first turning conveyor (21) runs in continuation of the feed conveyor (19) and that the second turning conveyor (22) is arranged offset from and in particular parallel to the first turning conveyor (21), whereby every second arriving pack (11) can be pushed laterally by a discharge element into the area of the second offset turning conveyor (22).

7. The device as claimed in claim 6 or one of the further claims, **characterized in that** the discharge element is a segmented wheel (23) rotating in particular in the horizontal plane with projections or segments (25, 26), whereby during the rotational movement of the segmented wheel (23) the segments (25, 26) contact the sides of the respective second pack (11) to be discharged and move it into the area of the second turning conveyor (22).

8. The device as claimed in claim 5 or one of the further claims, **characterized in that** the second turning conveyor (22) for the discharged packs (11) is driven at a lower conveying speed than the first turning conveyor (21) in such a way that the packs (11) transported by the second turning conveyor (22) can be aligned with the packs (10) of the first turning conveyor (21) during the turning movement to form pairs of packs (10, 11) lying alongside one another.

9. The device as claimed in claim 5 or one of the further claims, **characterized in that** preferably stationary guide elements are assigned to both turning conveyors (21, 22), namely in particular guide rods, guide rails or round belts, by means of which the packs (10, 11) of both turning conveyors (21, 22) can be tilted by (roughly) 90° during transport, in particular in opposite tilting directions.

10. The device as claimed in claim 9, **characterized in that** the packs (10, 11) are supported in the area of the feed conveyor (19) by guide elements acting on both sides, in particular by upper rail (29, 31) and lower rail (30, 32), whereby the guide rails (29 to 32) extend into the area of the turning line (20) to guide and execute the tilting movement of the packs (10, 11) in the area of the turning line (20).

11. The device as claimed in claim 10 or one of the further claims, **characterized in that** the lower rails (30, 32) are arranged as outer guide elements in the area of the two turning conveyors (21, 22) according to the travel path of the packs (10, 11) and preferably in a lower area according to the width or height of a base wall (39) of the packs (10, 11), whereby in the end section of the turning line (20) the lower rails (30, 32) effect a transverse-oriented pushing together of the packs (10, 11) to form the packing unit (12) and for alignment onto a discharge conveyor (28).

12. The device as claimed in claim 10 or one of the further claims, **characterized in that** the upper rails (29, 31) in an upper area rest against the packs (10, 11) in the area of the turning line (20), in particular against the tab (14), whereby the tilting movement of the packs (10, 11) is effected by the arc-shaped and downward oriented course of the upper rails (29, 31).

13. The device as claimed in claim 9 or one of the further claims, **characterized in that** the packs (10, 11) in one upper area, in particular in the area of the tab (14), are supported during the tilting movement by guide elements in contact on both sides, in particular by the outer upper rails (29, 31) on the one hand and by the inner guide rails, namely supplementary rail (33) and additional rail (34).

14. The device as claimed in claim 9 or one of the further claims, **characterized in that** the packs (10, 11) are guided on both sides (also) in the lower area during the tilting movement, namely on the outside by the lower rails (30, 32) and on the inside by supporting rails (35, 36).

15. The device as claimed in claim 5 or one of the further claims, **characterized in that** the packing units (12) can be aligned by the discharge conveyor (28) downline of the turning conveyors (21, 22), preferably by an upper belt (37) with stops (38) resting on the upper side of the packing units (12) for a side of the packing units (12) lying forwards in the transport direction.

16. The device as claimed in claim 15 or one of the further claims, **characterized in that** the discharge conveyor (28) runs at a reduced conveying speed compared with the turning conveyors (21, 22).

## Revendications

1. Procédé de fabrication d'unités d'emballage (12) à partir d'au moins deux emballages (10, 11) pouvant être réunis ensemble en fonction de leur conception, notamment en fonction de leur forme géométrique par formation de l'unité d'emballage (12), de préférence dans la réalisation avec une partie d'emballage (13) trapézoïdal et une attache (14) unilatérale ultérieure, moyennant quoi les emballages (10, 11) alignés sont livrés par un convoyeur d'alimentation (19) par ordre de poids volumique, **caractérisé par** les attributs suivants :
a) au moins un emballage sur deux (10, 11) est pivoté pendant le transport continu, de façon à ce que respectivement (deux) emballages adjacents (10, 11) présentent une position relative correspondant à l'unité d'emballage (12),
b) un emballage sur deux (10, 11) est retardé ou accéléré en fonction de la vitesse de transport, de façon à ce que des emballages (10, 11) attribués à une unité d'emballage (12) soient alignés l'un vers l'autre,
c) les (deux) emballages attribués l'un à l'autre (10, 11) d'une unité d'emballage (12) sont réunis par formation d'une unité d'emballage (12) par une poussée transversale,
d) les unités d'emballage (12) ainsi formées en continu sont évacuées.

2. Procédé selon la revendication 1, **caractérisé en ce que** les emballages (plats) (10, 11) sont transportés en position verticale par le convoyeur d'alimentation (19) et que les deux emballages (10, 11) sont pivotés au niveau d'un parcours de retournement (20) terminal respectivement de 90°C dans des directions opposées.

3. Procédé selon la revendication 1 ou 2, **caractérisé en ce qu'**un emballage sur deux (11) est enlevé vers le côté d'une rangée d'emballages arrivant en continu, au niveau du parcours de rotation (20) le long d'une trajectoire de transport séparée et est pivoté pendant ce temps, moyennant quoi de préférence les emballages (11) enlevés, déplacés le long de la trajectoire de transport séparée sont retardés par rapport à la vitesse de transport de façon à ce que les emballages (10, 11) attribués à une unité d'emballage (12) soient alignés l'un sur l'autre.

4. Procédé selon la revendication 1 ou l'une quelconque des autres revendications, **caractérisé en ce que** les emballages (10, 11) composés d'une partie d'emballage (13) et d'une attache (14) sont pivotés au niveau du parcours de retournement (20) de manière à ce que les attaches (14) des emballages (10, 11) attribués à une même unité d'emballage (12) soient pivotées l'une vers l'autre.

5. Procédé de fabrication d'unités d'emballage (12) à partir d'au moins deux emballages (10, 11) pouvant être réunis en fonction de leur conception, notamment en fonction de leur forme géométrique par formation de l'unité d'emballage (12), de préférence dans la réalisation avec une partie d'emballage (13) trapézoïdal et une attache (14) unilatérale ultérieure, moyennant quoi les emballages (10, 11) alignés sont livrés par un convoyeur d'alimentation (19) en position verticale à la suite les uns des autres, **caractérisé par** les attributs suivants :
a) deux convoyeurs, à savoir des convoyeurs de retournement (21, 22) sont placés au moins l'un à côté de l'autre au niveau d'un parcours de retournement (20),
b) les emballages arrivant (10, 11) peuvent être amenés alternativement à l'un et l'autre convoyeur de retournement (21, 22),
c) au niveau du parcours de retournement (20), les emballages au moins au nombre de un (10, 11) peuvent être pivotés pendant le transport au niveau du convoyeur de retournement au moins au nombre de un (21, 22) par des organes de retournement agissant sur les emballages (10, 11), de façon à ce que respectivement deux emballages (10,11) attribués à une unité d'emballage (12) présentent une position relative correspondant à l'unité d'emballage (12),
d) les emballages (10, 11) attribués l'un à l'autre pour former une unité d'emballage (12) peuvent être réunis pendant le transport par un mouvement transversal.

6. Dispositif selon la revendication 5, **caractérisé en ce qu'**un premier convoyeur de retournement (21) s'étend dans le prolongement du convoyeur d'alimentation (19) et que le deuxième convoyeur de retournement (22) est décalé et particulièrement parallèle au premier convoyeur de retournement (21), moyennant quoi un emballage (11) arrivant sur deux peut être poussé latéralement par un organe d'enlèvement au niveau du deuxième convoyeur de retournement (22) décalé.

7. Dispositif selon la revendication 6 ou l'une quelconque des autres revendications, **caractérisé en ce que** l'organe d'enlèvement est une roue à segment (23) circulaire en plan horizontal avec des saillies respectivement des segments (25, 26), moyennant quoi pendant le mouvement de rotation de la roue à segment (23), les segments (25, 26) saisissent chacun latéralement le deuxième emballage (11) à enlever et le déplacent au niveau du deuxième convoyeur de retournement (22).

8. Dispositif selon la revendication 5 ou l'une quelconque des autres revendications, **caractérisé en ce que** le deuxième convoyeur de retournement (22) des emballages (11) enlevés est entraîné avec une vitesse de convoyage plus faible que le premier convoyeur de retournement (21), de façon à ce que les emballages (11) transportés par le deuxième convoyeur de retournement (22) puissent être alignés pendant le mouvement de retournement sur les emballages (10) du premier convoyeur de retournement (21) en formant des paires d'emballages (10, 11) adjacentes les unes aux autres.

9. Dispositif selon la revendication 5 ou l'une quelconque des autres revendications, **caractérisé en ce que** les deux convoyeurs de retournement (21, 22) ont de préférence des organes d'alimentation fixes, à savoir en particulier des barres de guidage, des rails de guidage ou des courroies rondes, par lesquels les emballages (10, 11) des deux convoyeurs de retournement (21, 22) peuvent être basculés pendant le transport (d'environ) 90°, particulièrement en sens de bascule opposé.

10. Dispositif selon la revendication 9, **caractérisé en ce que** les emballages (10, 11) sont appuyés au niveau du convoyeur d'alimentation (19) par des organes de guidage agissant bilatéralement, particulièrement par des rails supérieurs (29, 31) ainsi que des rails inférieurs (30, 32), moyennant quoi les rails de guidage (29... 32) se poursuivent au niveau des convoyeurs de retournement (20) pour guider et mettre en place le mouvement de bascule des emballages (10, 11) au niveau du parcours de retournement (20).

11. Dispositif selon la revendication 10 ou l'une quelconque des autres revendications, **caractérisé en ce que** les rails inférieurs (30, 32) sont disposés comme organes de guidage extérieurs au niveau des deux convoyeurs de retournement (21, 22) conformément à la trajectoire des emballages (10, 11) et de préférence dans une zone inférieure correspondant à la largeur et/ou à la hauteur du fond (39) des emballages (10, 11), moyennant quoi les rails inférieurs (30, 32) effectuent à l'extrémité du parcours de retournement (20) une poussée transversale des emballages (10, 11) pour former l'unité d'emballage (12) et pour l'aligner sur un convoyeur d'évacuation (28).

12. Dispositif selon la revendication 10 ou l'une quelconque des autres revendications, **caractérisé en ce que** les rails supérieurs (29, 31) reposent dans une partie supérieure sur les emballages (10, 11) au niveau du parcours de retournement (20), particulièrement sur les attaches (14), moyennant quoi par un tracé en arc de cercle et descendant des rails supérieurs (29, 31), le mouvement de bascule des emballages (10, 11) est effectué.

13. Dispositif selon la revendication 9 ou l'une quelconque des autres revendications, **caractérisé en ce que** les emballages (10, 11) sont appuyés dans une zone supérieure, particulièrement au niveau de l'attache (14), pendant le mouvement de bascule par deux organes de guidage disposés bilatéralement, particulièrement par les rails supérieurs (29, 31) disposés à l'extérieur d'une part et par des rails de guidage placés à l'intérieur, soit des rails complémentaires (33) et des rails supplémentaires (34).

14. Dispositif selon la revendication 9 ou l'une quelconque des autres revendications, **caractérisé en ce que** les emballages (10, 11) sont dirigés des deux côtés (également) au niveau inférieur pendant le mouvement de bascule, à savoir à l'extérieur par les rails inférieurs (30, 32) et sur l'intérieur par des rails d'appui (35, 36).

15. Dispositif selon la revendication 5 ou l'une quelconque des autres revendications, **caractérisé en ce que** les unités d'emballage (12) peuvent être alignées par les convoyeurs d'évacuation (28) raccordés aux convoyeurs de retournement (21, 22), de préférence par une courroie supérieure (37) placée sur le côté supérieur des unités d'emballage (12) avec des butées (38) pour un côté placé devant le sens de transport des unités d'emballage (12).

16. Dispositif selon la revendication 15 ou l'une quelconque des autres revendications, **caractérisé en ce que** le convoyeur d'évacuation (28) fonctionne avec une vitesse de convoyage réduite par rapport aux convoyeurs de retournement (21, 22).
